## Europäisches Patentamt
## European Patent Office
## Office européen des brevets

(19)

(11) Veröffentlichungsnummer: **0 150 224**
**B1**

(12)

# EUROPÄISCHE PATENTSCHRIFT

(45) Veröffentlichungstag der Patentschrift:
14.01.87

(51) Int. Cl.⁴: **A 01 B 63/112**

(21) Anmeldenummer: **83110621.6**

(22) Anmeldetag: **25.10.83**

(54) **Widerstandsregelung für eine Gerätekupplung.**

(43) Veröffentlichungstag der Anmeldung:
**07.08.85 Patentblatt 85/32**

(45) Bekanntmachung des Hinweises auf die Patenterteilung:
**14.01.87 Patentblatt 87/3**

(84) Benannte Vertragsstaaten:
**AT DE FR GB IT SE**

(56) Entgegenhaltungen:
FR-A-2 367 281
FR-A-2 469 628
GB-A-2 058 538
GB-A-2 079 577

(73) Patentinhaber: **DEERE & COMPANY, 1 John Deere Road, Moline Illinois 61265 (US)**

(72) Erfinder: **Benedek, Vasile, Uhlandstrasse 9, D-6831 Brühl (DE)**
Erfinder: **Hückler, Volker, Rossittenstrasse 11, D-7760 Radolfzell 16 (DE)**
Erfinder: **Ortlepp, Hilmar, Danziger Baumgang 28, D-6800 Mannheim 31 (DE)**

(74) Vertreter: **Feldmann, Bernhard, DEERE & COMPANY European Office, Patent Department Steubenstrasse 36-42 Postfach 503, D-6800 Mannheim 1 (DE)**

## Beschreibung

Die Erfindung betrifft eine Widerstandsregelung für eine Gerätekupplung mit mindestens einem einenends an ein Gerät, anderenends an einen Biegestab anschließenden Zugglied, wobei der Biegestab als Impulsgeber für die Arbeitshöhenstellung des Gerätes ausgelegt, an einem ziehenden Fahrzeug vorgesehen, in einem teilkugelförmig ausgebildeten Auflager fliegend gelagert, um das Auflager biegbar und mit einer Hülse versehen ist, wobei ferner am ziehenden Fahrzeug ein Führungsteil lösbar angebracht ist, der eine die Hülse mit Spiel aufnehmende Ausnehmung aufweist.

Bei dieser bekannten Widerstandsregelung (FR-A-2 367 281) führt der Führungsteil den Biegestab endseitig dergestalt, daß er sich nur in einer im wesentlichen waagrechten Ebene bewegen kann, um somit Regelimpulse, die aus dem Gewicht des angehängten Gerätes resultieren, zu vermeiden. Der Führungsteil ist über Distanzmittel an ein Getriebegehäuse mit Schrauben angeflanscht, während das aus einem konvex geformten Lagerring und einem konkav ausgebildeten Außenring zusammengesetzte Auflager in eine Öffnung des Getriebegehäuses eingesetzt ist. Das Auflager ist dabei tief in die Öffnung eingeschoben und einem sich zu dem Beginn der Öffnung hin erstreckenden weiteren Ring benachbart. Die Hülse ist zylindrisch ausgebildet und soll sich nur horizontal in der Ausnehmung des Führungsteils bewegen können. Auf den Biegestab ist stirnseitig jeweils eine Platte aufgeschraubt, die an der Außenseite des jeweils zugehörigen Führungsteils anliegen.

Der Nachteil dieser Widerstandsregelung liegt in einer hohen Anzahl von Teilen, die zur Lagerung und zum Führen des Biegestabes verwendet werden, in der Möglichkeit der Überbeanspruchung des Biegestabes und in der ungünstigen Wartungsmöglichkeit des Auflagers. Denn das Auflager kann nur unter räumlich ungünstigen Bedingungen unter dem Fahrzeug aus der Öffnung mit einem speziellen Werkzeug gezogen werden, und beim Lösen der den Führungsteil haltenden Schrauben lösen sich auch die Distanzmittel, die zwischen diesem und dem Getriebegehäuse angebracht sind.

Die der Erfindung zugrunde liegende Aufgabe wird darin gesehen, den Biegestab im Bereich seines Auflagers vorteilhafter auszubilden.

Diese Aufgabe ist erfindungsgemäß durch einen Lagerrahmen bestehend aus einem L-förmigen Halter und dem Führungsteil, wobei das Auflager in dem einen Schenkel des Halters angeordnet und der Führungsteil an dem anderen Schenkel angebracht ist, die Durchbiegung des Biegestabes in der Hauptkraftangriffsrichtung über das Spiel zwischen der Hülse und der Ausnehmung begrenzbar ist, die Hülse eine kegelige oder ballige Außenform aufweist und seitlich der Ausnehmung an oder gegenüber dem Ende des Biegestabes eine ortsfeste Lasche vorgesehen ist, gelöst worden.

Auf diese Weise ist das für die Lagerung des Biegestabes notwendige Auflager und der Führungsteil in oder an einem kompakten Gebilde, nämlich dem Lagerrahmen, untergebracht, das von dem ziehenden Fahrzeug lösbar ist und gesondert gewartet werden kann. Die Begrenzung der Ausbiegung des Biegestabes durch die Hülse in der Ausnehmung verhindert eine Überbeanspruchung des Biegestabes und des Auflagers, so daß dadurch eine Verschleißminderung eintritt. Insbesondere führt die Hülse aufgrund ihrer balligen oder kegeligen Außenform zu einer Linienberührung mit der Ausnehmung, so daß die Flächenpressung gering gehalten werden kann.

Um bei einem unerwarteten Bruch des Biegestabes zu verhindern, daß dessen Bruchteile aus dem Getriebegehäuse und/oder aus dem Auflager seitlich herauswandern, wird nach einem weiteren Erfindungsmerkmal eine Sicherung derart eingebaut, daß die Lasche mit dem den Führungsteil aufnehmenden anderen Schenkel lösbar verbunden ist, wobei die Lasche den Biegestab endseitig umgreift und eine Aussparung aufweist, die eine geringere Weite als der größte Außendurchmesser der Hülse besitzt, oder daß die Lasche den Biegestab endseitig übergreift. Im Gegensatz zu der bei der bekannten Widerstandsregelung benutzten Platte ist die Lasche aufgrund ihrer ortsfesten Anordnung und ihrer Ausbildung geeignet, Bruchteile des Biegestabes in ihrer Stellung zu halten und das Herauswandern eines Bruchteiles aus dem Getriebegehäuse zu vermeiden, während die bekannte Platte sich mit dem Bruchteil verschieben würde.

Auf sehr einfache Weise läßt sich das Auflager montieren, austauschen oder warten, wenn ein Lagerstück vorgesehen ist, das das Auflager in sich aufnimmt, eine zwischen dem Auflager und der Außenseite vorgesehene Dichtung zwischen dem Lagerstück und dem Biegestab aufweist und flüssigkeitsdicht in den einen Schenkel einsetzbar ist, wobei über die Dichtung ein Austritt von Schmiermittel aus dem Getriebegehäuse vermieden wird, aber dem Auflager dennoch zugänglich bleibt.

Dadurch, daß nach einem weiteren erfinderischen Vorschlag der Führungsteil über eine formschlüssige Verbindung eindeutig mit dem anderen Schenkel verbindbar ist, ist eine stets gleiche Zuordnung des Führungsteils zu der Hülse und somit dem Ende des Biegestabes gegeben, so daß die Ausbiegung des Biegestabes stets nur innerhalb der gleichen Grenzen möglich ist.

Ein vernünftiger Teileaufwand wird bei einer Widerstandsregelung, deren Führungsteil über eine Schraube an dem ziehenden Fahrzeug festlegbar ist, dann betrieben, wenn die Lasche, der Halter und der Führungsteil an dem ziehenden Fahrzeug gemeinsam über die Schraube festlegbar sind.

Dadurch, daß erfindungsgemäß der Halter einen zylindrischen Ansatz aufweist, der in eine entsprechend ausgebildete Öffnung in dem ziehenden Fahrzeug einsetzbar ist und den Biegestab konzentrisch und mit Spiel umfaßt, wird erreicht, daß sich der Lagerrahmen nicht gegenüber dem ziehenden Fahrzeug verschiebt und an diesem immer in der gleichen Stellung montiert wird, wobei eine ausreichende Dichtheit des ziehenden Fahrzeuges zum Vermeiden des Schmiermittelaustritts dadurch erreicht wird, daß zwischen dem Ansatz und der Öffnung eine Dichtung eingesetzt ist. Eine weitere Vereinfachung bezüglich des Produktionsablaufsdes Lagerrahmens wird erreicht, indem der Ansatz und das Lagerstück in einem den einen Schenkel durchdringenden Zylinder zusammengefaßt sind.

In der Zeichnung ist ein nachfolgend näher erläutertes Ausführungsbeispiel der Erfindung gezeigt. Es stellt dar:

Fig. 1 ein Fehrzeug in Seitenansicht, wobei ein rückwärtiges Rad entfernt ist um eine Gerätekupplung besser zeigen zu können,

Fig. 2 das Auflager der Gerätekupplung im Horizontalschnitt.

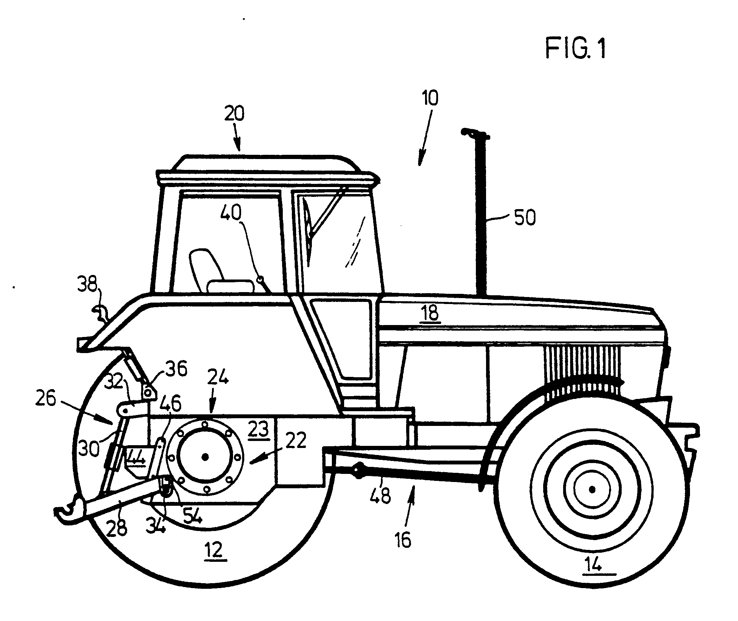

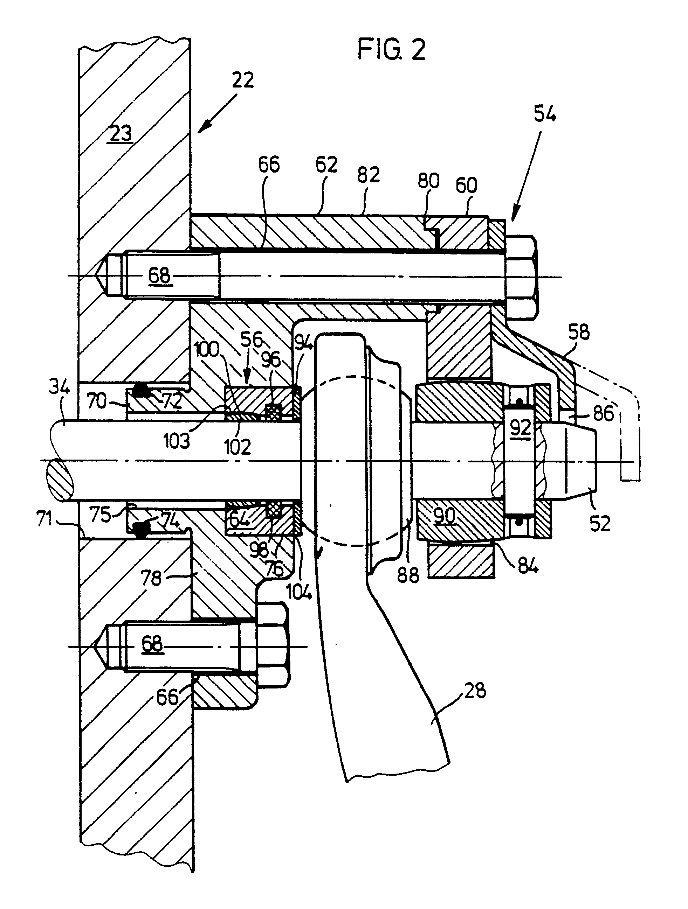

Ein in Fig. 1 gezeichnetes Fahrzeug 10 in Form eines Ackerschleppers trägt auf einem auf rückwärtigen und vorderen Rädern 12 und 14 abgestützten Chassis 16 im wesentlichen einen Motorteil 18 und eine Kabine 20. Rückwärtig des Motorteils 18 und unterhalb der Kabine 20 schließt ein Getriebegehäuse 22 an, das wiederum Achstrichter 24 trägt, in denen die rückwärtigen Räder 12 drehbar gelagert sind. An das von Getriebegehäusewänden 23 umgebene Getriebegehäuse 22 ist eine Gerätekupplung 26 montiert. Diese besteht außer einem nicht sichtbaren im Getriebegehäuse 22 gelegenen Regelmechanismus hauptsächlich aus Zuggliedern 28, die auch als untere Lenker bezeichnet verden, jeweils einer diesen zugeordneten Hubstrebe 30 und jeweils einem Hubarm 32, der auf einer ebenfalls nicht gezeichneten Hubwelle befestigt ist, wobei die Hubstreben 30 gelenkig mit den zuggliedern 28 und den Hubarmen 32 verbunden sind. Das zugglied 28 greift an einem Biegestab 34 an, der das Getriebegehäuse 22 in dessen rückwärtigen unteren Bereich quer zur Fahrtrichtung durchdringt und sich aus diesem heraus erstreckt, wobei an den Austrittstellen des Biegestabes 34 in den Getriebegehäusewänden 23 aus Fig. 2 ersichtliche Auflager 56 vorgesehen sind. Die Gerätekupplung 26 ist spiegelbildlich zur vertikalen Längsmittelebene des Fahrzuges 10 angeordnet, weshalb sich die Beschreibung des Bereiches des Auflagers 56 nur mit dem in Vorwärtsfahrtrichtung rechts der vertikalen Längsmittelebene gelegenen Bereich befaßt. Für den links gelegenen Bereich des Auflagers 56 gilt die Beschreibung analog.

In dem Bereich der Hubwelle, also im oberen rückwärtigen Bereich des Getriebegehäuses 22, ist eine Halterung 36 für einen ebenfalls als Zugglied dienenden oberen Lenker 38 vorgesehen, der an einen Turm eines nicht dargestellten anzubauenden Gerätes ankuppelbar ist. Die Halterung 36 ist starr angebaut, und da die Zugglieder 28 auf den die Steuerimpulse übertragenden Biegestab 34 aufgesetzt sind, handelt es sich hierbei um eine sogenannte Unterlenkerregelung.

Bei einer Unterlenkerregelung wird der Biegestab 34 endseitig von Zugkräften beansprucht, die sich aus dem Arbeitswiderstand des angebauten oder angehängten Gerätes ergeben und die von den einenends an dem Gerät und anderenends an dem Biegestab 34 angreifenden Zuggliedern 28 übertragen werden. Der obere Lenker 38 dient dabei als Gegenhalter, um ungewollte heckseitige Höhenbewegungen des Gerätes zu vermeiden. Diese Zugkräfte wirken als Biegekräfte um das jeweilige Auflager 56 in der Getriebegehäusewand 23 des Getriebegehäuses 22 und führen dazu, daß sich der Biegestab 34 mehr oder weniger krümmt, wobei sein Ausschlag im direkten Verhältnis zur vom unteren Lenker übertragenen Kraft steht. Zwischen den Auflagern 56 liegt normalerweise in dem Getriebegehäuse 22 ein Regelgestänge des Regelmechanismus am Biegestab 34 an, das die Biegebewegung auf ein Ventil überträgt, über welches ein Hydraulikzylinder zum Auf- und Abbewegen der zugglieder 28 um den Biegestab 34 mit Druckflüssigkeit beaufschlagt wird. Der artige Regelmechanismen sind hinreichend bekannt und bedürfen daher keiner weiteren Erläuterungen. Die Regelung ist dabei so getroffen, daß bei größer werdendem Zugwiderstand das angekuppelte Gerät angehoben und daß es bei kleiner werdendem Zugwiderstand abgesenkt wird.

Die Gerätekupplung 26 selbst kann über einen Bedienungshebel 40 in der Kabine 20 von einem das Fahrzeug 10 bedienenden Fahrer betätigt werden. Aus Fig. 1 ist weiterhin entnehmbar, daß sich am rückwärtigen Ende des Getriebegehäuses 22 ein Zapfwellenantrieb, von dem nur ein Schutzschild 44 zu erkennen ist, und eine Vorrichtung 46 zum Begrenzen der Seitenbeweglichkeit der Zugglieder 28 befinden. Von dem vorderen Ende des Getriebegehäuses 22 erstreckt sich eine die vorderen Räder 14 antreibende Welle 48 bis zu einer in Fig. 1 verdeckten Vorderachse, und oberhalb des Motorteils 18 ist ein Auspuffrohr 50 zu erkennen. Wie aus Fig. 2 zu ersehen ist, werden aus dem Getriebegehäuse 22 herausragende Stummel 52 des Biegestabes 34 von jeweils einer Konsole 54 umgeben, die im folgenden wie auch das erfindungsgemäße Auflager 56 des Biegestabes 34 detailliert beschrieben wird.

Die Konsole 54 ist vierstückig-ausgebildet und besteht aus einer Lasche 58, einem Anschlag oder Führungsteil 60, einem Halter 62 und einem Lagerstuck 64. Der Halter 62 ist L-förmig ausgebildet und besteht aus einem an der Getriebegehäusewand 23 anliegenden und einem senkrecht zu dieser nach außen verlaufenden anderen Schenkel 78 und 82. Der Halter 62 weist außer Bohrungen 66 zum Aufnehmen von Schrauben 68, über die die Konsole 54 komplett an das Getriebegehäuse 22 angeflanscht wird, einen ringförmigen Ansatz 70 an dem Schenkel 78 auf. Dieser wird in eine Öffnung 71 in der Getriebegehäusewand 23 des Getriebegehäuses 22 eingesetzt, durch welche sich der Biegestab 34 seitlich aus dem Getriebegehäuse 22 heraus erstreckt. Der ringförmige Ansatz 70 weist eine ihn zentrisch durchdringende Bohrung 75 auf, die den Biegestab 34 aufnimmt und deren Durchmesser größer ist als der Außendurchmesser des Biegestabes 34, wobei die Durchmesserdifferenz ausreichend groß ist, um die Biegebewegung des Biegestabes 34 um das Auflager 56 nicht zu behindern. Über den ringförmigen Ansatz 70 wird die Lage des Halters 62 und somit auch des Auflagers 56, des Führungsteil 60 und auch der Lasche 58 zu dem Getriebegehäuse 22 und dem Biegestab 34 stets eindeutig festgelegt. An dem Mantel des ringförmigen Ansatzes 70 ist eine Ringnut 72 zur Aufnahme eine nachgiebigen Dichtung 74 eingestochen, verhindert, daß Öl aus dem Getriebegehäuse 22 ausläuft. Dem ringförmigen Ansatz 70 an dem Schenkel 78 gegenüber ist eine Aussparung 76 vorgesehen, in die das Lagerstück 64 flüssigkeitsdicht eingepreßt wird und deren Durchmesser und Breite ungefähr denen des ringförmigen Ansatzes 70 entsprechen. Parallel zu dem an der Getriebegehäusewand 23 anliegenden und den ringförmigen Ansatz 70 sowie die Aussparung 76 aufweisenden Schenkel 78 des Halters 62 ist der Führungsteil 60 auf einer Stirnfläche 80 des anderen Schenkels 82 über die Schrauben 68 befestigt. Er greift zudem formschlüssig an dem Halter 62 an und besitzt gegenüber dem am Halter 62 befestigten Ende eine Ausnehmung 84, die im Durchmesser auf die Biegecharakteristik des Biegestabes 34 abgestimmt ist, wie dies später noch erläutert wird. Die formschlüssige Verbindung trägt dazu bei, daß die Ausnehmung 84 immer mit dem Auflager 56 und der Bohrung 75 fluchtet. Der Schenkel 78, der andere Schenkel 82 und der Führungsteil 60 ergeben die nach unten, oben und hinten offene U-förmige Konsole 54, die in sich das vordere Ende des zuggliedes 28 aufnimmt. In Richtung seitlich von dem Getriebegehäuse 22 fort folgt auf den Führungsteil 60 die Lasche 58, eine Z-Form aufweist und ebenfalls von der sowohl den Führungsteil 60 wie auch den Halter 62 durchdringenden Schraube 68 an dem Fahrzeug 10 gehalten wird. Die Lasche 58 weist an ihrem der Stirnfläche 80 des Halters 62 abgelegenen Ende eine Aussparung 86 auf, die in sich den Stummel 52 des Biegestabes 34 auch bei seinem größten Ausschlag noch aufnehmen kann. In dem Freiraum zwischen dem Halter 62 und dem Führungsteil 60 befindet sich das frontseitige Ende des Zuggliedes 28, der zur Befestigung auf dem Biegestab 34 eine Gelenkkugel 88 aufweist, die auf dem Biegestab 34 verschiebbar ist. In der in dem Führungsteil 60 eingebrachten Ausnehmung 84 ist eine den Biegestab 34 in sich aufnehmende ballige oder kegelige Hülse 90 angeordnet, die über einen verdrahteten Stift 92 auf dem Biegenstab 34 gehalten wird und deren kleinster Außendurchmesser größer ist als der Innendurchmesser der Aussparung 86 der Lasche 58. Die ballige Hülse 90 steht über der Außenfläche des Führungsteils 60 vor, und zwar so weit, daß der Stift 92 an der Außenfläche des Führungsteile 60 vorbei durch die ballige Hülse 90 und den Biegestab 34 hindurch gesteckt und mit einem Draht gesichert werden kann. Die Lasche 58 kann dennoch bedingt durch ihre Z-Form den Stummel 52 des Biegestabes 34 seitlich der balligen Hülse 90 übergreifen und somit gegebenenfalls den Biegestab 34 axial festhalten. Die Lasche 58 muß den Biegestab 34 nicht unbedingt mit Hilfe der Aussparung 86 umgreifen, sondern sie kann auch am Biegestab 34 endseitig vorbeigeführt werden, wie dies in Fig. 2 in unterbrochenen Linien angedeutet ist. Die Außenkontur der balligen Hülse 90 ist so gewählt, daß sie beim maximalen Durchbiegen des Biegestabes 34 in der Ausnehmung 84 auf einer Linie zur Anlage kommt und nicht nur eine reine Punktberührung mit der dem Getriebegehäuse 22 abgelegenen Kante der Ausnehmung 4 eingeht. Dieses Merkmal gewährleistet, daß die maximale Durchbiegung des Biegestabes 34 stets gleich bleibt, da die durch die linienhafte Anlage entstehende Flächenpressung verschleißhemmend wirkt. Der Führungsteil 60 ist für den Fall der Überlastung des Biegestabes 34 vorgesehen und bildet bei hoher Biegebeanspruchung ein Gegenlager, das einen Teil der Biegekräfte auffängt und somit den Biegestab 34 vor Bruch schützt. Er bestimmt zudem den maximalen Regelimpuls, der auf den Regelmechanismus noch übertragen wird. Dadurch wird vermieden, daß plötzlich auftretende Zugwiderstandsspitzen, die nicht die eigentliche Belastung durch das angehängte Gerät widerspiegeln, den Regelmechanismus derart stark verstellen, daß das angehängte Gerät übermäßig weit angehoben wird. Zwischen dem zuggleid 28 und dem Lagerstück 64 ist letztlich auf den Biegestab 34 ein Distanzring 94 aufgesteckt, der zum Ausgleichen des Seitenspiels des Zuggliedes 28 auf dem Biegestab 34 benutzt wird. Dieses Seitenspiel ist erforderlich, da sich die ballige Hülse 90 beim Durchbiegen des Biegestabes 34 auf den Schenkel 78 zubewegt und dazu einen gewissen Freiraum benötigt. Das vordere Ende des zuggliedes 28 bewegt sich während des Biegevorgangs von dem Schenkel 78 weg, indem es sich an dem Distanzring 94 abstützt. Der Innendurchmesser des Distanzringes 94 ist so zu wählen, daß sich der Distanzring 94 nicht auf dem Biegestab 34 während des Verbiegens verkantet. Der Distanzring 94 dient gleichfalls als Verschleißteil, das beim Biegevorgang von dem vorderen Ende des Biegestabes 34 fest an das Lagerstück 64 angepreßt wird und bei Erreichen einer Verschleißgrenze ausgetauscht werden muß.

Faßt man das zuvor Beschriebene zusammen, dann wird vom Innern des Getriebegehäuses 22 aus gesehen der Biegestab 34 zunächst von dem ringförmigen Ansatz 70, dann von dem Halter 62, dem Lagerstück 64, dem Distanzring 94, der Gelenkkugel 88, der balligen Hülse 90 und dem Führungsteil 60 und der Aussparung 86 in der Lasche 58 umfaßt, d. h. er erstreckt sich durch die Öffnung 71, die Bohrung 75 und das Lagerstück 64.

Im Innern des Lagerstückes 64 ist dem zugglied 28 zugelegen eine eine elastische Dichtung 96 aufnehmende Nut 98 und dem zugglied 28 abgelegen eine bogenförmige Lagerfläche 100 eingebracht, die mit einem entsprechend bogenförmig hierzu ausgebildeten Lagerring 102 zusammenwirkt, wobei sich die bogen- oder teilkugelförmig ausgebildete Lagerfläche 100 an zwei sich radial gegenüberliegenden Stellen 103 zu der Bohrung 75 hin öffnet, durch die der Lagerring 102 in die Lagerfläche 100 eingeführt werden kann. Der Lagerring 102 weist gegenüber dem Biegestab 34 eine Spielpassung auf, die es ihm ermöglicht, bei seiner Durchbiegung, die durch äußere Krafteinwirkung eintritt, sich längs zu verschieben. Die Axialbewegung des Biegestabes 34 entsteht dadurch, daß dieser während des Biegevorgangs zwischen den Auflagern 56 ausgelenkt wird und dabei seine Enden mit sich zum Innern des Getriebegehäuses 22 zieht. Durch die Spielpassung zwischen dem Lagerring 102 und dem Biegestab 34 werden Verspannungen in dem Auflager 56 während der Axialbewegung des Biegestabes 34 vermieden. Sich in dem Getriebegehäuse 22 befindliches Getriebe- oder Hydrauliköl wird von der Dichtung und der Dichtung 96 am Austritt gehindert, es hat aber Zutritt zu der Berührungsfläche zwischen der Lagerfläche 100 und dem Lagerring 102 und dem Spalt zwischen dem Lagerring 102 und dem Biegestab 34, wodurch die Reibungskräfte und somit auch der Verschleiß merklich reduziert werden. Das Lagerstück 64 kann auch als Einschraubteil ausgebildet sein, damit es bei Verschleiß zwischen dem Lagerring 102 und der bogenförmigen Lagerfläche 100 als Einheit mit der Dichtung 96 und dem Lagerring 102 in einfacher Weise austauschbar ist, wobei die Dichtwirkung über eine weitere Dichtung oder durch eine auf das Gewinde aufgebrachte Dichtmasse erreicht werden kann.

Beim Betrieb des Fahrzeuges 10, wenn dieses an die Zugglieder 28 angekuppelte Geräte über das Feld zieht und diese den Zugwiderstand auf den Biegestab 34 übertragen, findet folgendes statt, wobei zur Verdeutlichung darauf hingewiesen wird, daß die Vorwärtsfahrtrichtung und somit die Zugrichtung für ein angehängtes Gerät in Fig. 2 nach oben zeigt.

Durch die Zugbelastung der Zugglieder 28 verbiegt sich der Biegestab 34 um die Auflagefläche des Lagerringes 102 in der bogenförmigen Lagerfläche 100. Seine Stummel 52 bewegen sich in Fig. 2 nach unten und demgemäß das in das Getriebegehäuse 22 ragende Teilstück nach oben, wobei der Lagerring 102 entlang der bogenförmigen Lagerfläche 100 gleitet und der Biegestab 34 in dem Lagerring 102 die notwendige Axialbewegung ausführt. Diese von der Zugbelastung abhängige Verbiegung wird durch die Ausnehmung 84 in dem Führungsteil 60 begrenzt, und zwar ergibt sich der größtmögliche Ausschlag des Biegestabes 34 in der Regel aus dem halben Differenzbetrag des Durchmessers der Ausnehmung 14 abzüglich dem Außendurchmesser der balligen Hülse 90 an der Auflagelinie. Selbstverständlich kann entsprechend der durch das Fahrzeug 10 aufbringbaren Zugkraft bzw. der Stärke der Regelimpulse zum einen die Bohrung auch in einem größeren oder einem kleineren Durchmesser hergestellt werden, was zu einer Maximal-Regelwert-Verschiebung führt. Zum anderen kann aber auch die ballige Hülse 90 gegen eine andere mit einem kleineren oder mit einem größeren Außendurchmesser ausgetauscht werden. Während des Durchbiegens des Biegestabes 34 gleitet der Distanzring 94 auf einer dem Getriebegehäuse 22 abgelegenen Fläche 104 des Lagerstückes 64, und die Dichtung 96, die zwischen der Nut 98 und dem Biegestab 34 eingesetzt ist, folgt dessen Bewegung, um somit eine stete Abdichtung des Getriebegehäuses 22 zu gewährleisten. Wie Fig. 2 zu entnehmen ist, läßt die Ausnehmung 84 und die Aussparung 86 in der Lasche 58 auch eine hier nach oben, d. h. beim Fahrzeug 10 eine nach vorn gerichtete Bewegung der zugglieder 28 zu, die beispielsweise beim Zurücksetzen des Fahrzeuges 10 oder bei sonstigem Lastwechsel mit angehängtem und belastetem Gerät möglich ist. Das durch den Lagerring 102 und die bogenförmige Lagerfläche 100 gebildete Auflager 56 führt aufgrund der großen Gleitflächen zu geringen Flächenpressungen, die einem vorzeitigen Verschleiß und einem hohen Reibungswiderstand während des Durchbiegens des Biegestabes 34 entgegenwirken.

Sollte in einem nicht zu erwartenden Falle der Biegestab 34 ddennoch brechen, so wird, um weitere Schäden zu vermeiden, insbesondere einem Auslaufen des Getriebe- oder Hydrauliköls vorzubeugen, der Biegestab 34 an seinen Stummeln 52 über die ballige Hülse 90 gegen ein seitliches Herauswandern aus dem Getriebegehäuse 22 von der Lasche 58 axial gehalten. Das Auswechseln oder Umkehren des zugglieder 28 geschieht auf einfache Art dadurch, daß nach dem Lösen der Schrauben 68 und nach dem Entfernen des Stiftes 92 die Lasche 58, der Führungsteil 60 und die ballige Hülse 90 abgenommen werden, wodurch auch as zugglied 28 von dem Biegestab 34 heruntergeschoben werden kann.

Alternativ zu dem in Fig. 2 offenbarten Ausführungsbeispiel können das Lagerstück 64 und der Ansatz 70 auch als ein einziges Drehteil ausgebildet sein, das an gleicher Stelle in eine den Halter 62 durchdringende Bohrung einschraub- oder einpreßbar ist. Dieses Drehteil könnte problemlos auf einer Drehbank oder in einem Drehautomaten gefertigt werden, während in den Halter 62 nur die entsprechende Bohrung einzubringen ist.

## Patentansprüche

1. Widerstandsregelung für eine Gerätekupplung (26) mit mindestens einem einenends an ein Gerät, anderenends an einen Biegestab (34) anschließenden Zugglied (28), wobei der Biegestab (34) als Impulsgeber für die Arbeitshöhenstellung des Gerätes ausgelegt, an einem ziehenden Fahrzeug (10) vorgesehen, in einem teilkugelförmig ausgebildeten Auflager (56) fliegend gelagert, um das Auflager (56) biegbar und mit einer Hülse (90) versehen ist, wobei ferner am ziehenden Fahrzeug (10) ein Führungsteil (60) lösbar angebracht ist, der eine die Hülse (90) mit Spiel aufnehmende Ausnehmung (84) aufweist, gekennzeichnet durch einen Lagerrahmen bestehend aus einem L-förmigen Halter (62) und dem Führungsteil (60), wobei das Auflager (56) in dem einen Schenkel (78) des Halters (62) angeordnet und der Führungsteil (60) an dem anderen Schenkel (82) angebracht ist, die Durchbiegung des Biegestabes (34) in der Hauptkraftangriffsrichtung über das Spiel zwischen der Hülse (90) und der Ausnehmung (84) begrenzbar ist, die Hülse (90) eine kegelige oder ballige Außenform aufweist und seitlich der Ausnehmung (84) an oder gegenüber dem Ende des Biegestabes (34) eine ortsfeste Lasche (58) vorgesehen ist.

2. Widerstandsregelung nach Anspruch 1, dadurch gekennzeichnet, daß die Lasche (58) mit dem den Führungsteil (60) aufnehmenden anderen Schenkel (82) lösbar verbunden ist, wobei die Lasche (58) den Biegestab (34) endseitig umgreift und eine Aussparung (86) aufweist, die eine geringere Weite als der größte Außendurchmesser der Hülse (90) besitzt.

3. Widerstandsregelung nach Anspruch 1 oder 2, dadurch gekennzeichnet, daß die Lasche (58) den Biegestab (34) endseitig übergreift.

4. Widerstandsregelung nach einem oder mehreren der vorhengen Ansprüche, dadurch gekennzeichnet, daß ein Lagerstück (14) vorgesehen ist, das das Auflager (56) in sich aufnimmt, eine zwischen dem Auflager (56) und der Außenseite vorgesehene Dichtung (96) zwischen dem Lagerstück (64) und dem Biegestab (34) aufweist und flüssigkeitsdicht in den einen Schenkel (78) einsetzbar ist.

5. Widerstandsregelung nach einem oder mehreren der vorherigen Ansprüche, dadurch gekennzeichnet, daß der Führungsteil (60) über eine formschlüssige Verbindung eindeutig mit dem anderen Schenkel (82) verbindbar ist.

6. Widerstandsregelung nach einem oder mehreren der vorherigen Ansprüche, wobei der Führungsteil (60) über mindestens eine Schraube (68) an dem ziehenden Fahrzeug (10) festlegbar ist, dadurch gekennzeichnet, daß die Lasche (58), der Halter (62) und der Führungsteil (60) an dem ziehenden Fahrzeug (10) gemeinsam über die Schraube (68) festlegbar sind.

7. Widerstandsregelung nach einem oder mehreren der vorherigen Ansprüche, dadurch gekennzeichnet, daß der Halter (62) einen zylindrischen Ansatz (70) aufweist, der in eine entsprechend ausgebildete Öffnung (71) in dem ziehenden Fahrzeug (10) einsetzbar ist und den Biegestab (34) konzentrisch und mit Spiel umfaßt.

8. Widerstandsregelung nach einem oder mehreren der vorherigen Ansprüche, dadurch gekennzeichnet, daß zwischen dem Ansatz (70) und der Öffnung (71) eine Dichtung (74) eingesetzt ist.

9. Widerstandsregelung nach einem oder mehreren der vorherigen Ansprüche, dadurch gekennzeichnet, daß der Ansatz (70) und das Lagerstück (64) in einem den einen Schenkel (78) durchdringenden zylinder zusammengefaßt sind.

## Claims

1. Draft control for an implement linkage (26) having at least one draft element (28) connecting at one end to an implement and at the other end to a flexible bar (34), the flexible bar (34) being designed as a pulse transmitter for the working height position of the implement and being provided on a pulling vehicle (10), mounted overhung in a seat (56) in the form of a partial sphere, bendable about the seat (56) and provided with a collar (90), a guide member (60) having an opening (84) accommodating the collar (90) with a clearance being moreover arranged detachably on the pulling vehicle (10), characterised by a bearing frame consisting of an L-shaped holder (62) and the guide member (60), the seat (56) being arranged in one arm (78) of the holder (62) and the guide member (60) being mounted on the other arm (82), the deflection of the flexible bar (34) in the direction of action of the main force being limitable by means of the clearance between the collar (90) and the opening (84), the collar (90) having a barrel-shaped or convex external shape and a fixed side bar (58) being provided at the side of the opening (84) at or opposite the end of the flexible bar (34).

2. Draft control according to claim 1, characterised in that the side bar (58) is detachably connected to the other arm (82) receiving the guide member (50), the side bar (58) embracing the flexible bar (34) at its end and having an opening (86) which has a width smaller than the maximum external diameter of the collar (90).

3. Draft control according to claim 1 or 2, characterised in that the side bar (58) overlaps the side bar (58) at its end.

4. Draft control according to one or more of the preceding claims, characterised in that a bearing piece (64) is provided which receives the seat (56) in it, has a seal (96) between the bearing piece (64) and the flexible bar (34) provided between the seat (56) and the outside, and can be inserted in fluid-tight relationship in the one arm (78).

5. Draft control according to one or more of the preceding claims, characterised in that the guide member (60) can be connected unmistakably to the other arm (82) by means of a mating connection.

6. Draft control according to one or more of the preceding claims, wherein the guide member (60) is fixable in position on the pulling vehicle (10) through the medium of at least one bolt (68), characterised in that the side bar (58), the holder (62) and the guide member (60) can be fixed jointly in position on the pulling vehicle (10) through the medium of the bolt (68).

7. Draft control according to one or more of the preceding claims, characterised in that the holder (62) has a cylindrical projection (70) which can be inserted in a correspondingly formed opening (71) in the pulling vehicle (10) and embraces the flexible bar (34) concentrically and with a clearance.

8. Draft control according to one or more of the preceding claims, characterised in that a seal (74) is inserted between the projection (70) and the opening (71).

9. Draft control according to one or more of the preceding claims, characterised in that the projection (70) and the bearing piece (64) are combined in a cylinder extending through the one arm (78).


**Revendications**

1.- Dispositif de réglage de résistance pour un attelage pour instruments (26) comportant au moins un organe de traction (28) se raccordant par l'une de ses extrémités à un instrument et, par l'autre extrémité, à une barre de flexion (34), la barre de flexion (34) étant conformée en transmetteur d'impulsions pour le réglage de la hauteur de travail de l'instrument, étant prévue sur un véhicule tracteur (10), étant montée en porte-à-faux dans un appui (56) avant la forme d'une section de sphère, pouvant fléchir autour de l'appui (56) et comportant un manchon (90), un élément de guidage (60) étant, en outre, placé de façon amovible sur le véhicule tracteur (10) et comportant un évidement (84) recevant le manchon (90) avec jeu, caractérisé par un bâti de support comprenant un support en L (62) et l'élément de guidage (60), l'appui (56) étant placé dans une branche (78) du support (62) et l'élément de guidage (60) étant placé sur l'autre branche (82), la flexion de la barre de flexion (34) dans la direction d'application de la force principale pouvant être limitée par le jeu entre le manchon (90) et l'évidement (84), le manchon (90) présentant une forme extérieure conique ou bombée et une patte fixe (58) étant prévue sur le côté de l'évidement (84) à l'extrémité de la barre de flexion (34) ou en face de celle-ci.

2.- Dispositif suivant la revendication 1, caractérisé en ce que la patte (58) est reliée de façon amovible à l'autre branche (82) recevant l'élément de guidage (60) la patte (58) entourant la barre de flexion (34) à une extrémité et comportant un évidement (86) qui présente un diamètre intérieur inférieur au plus grand diamètre extérieur du manchon (90).

3.- Dispositif suivant la revendication 1 ou 2, caractérisé en ce que la patte (58) recouvre la barre de flexion (34) à une extrémité.

4.- Dispositif suivant une ou plusieurs des revendications précédentes, caractérisé en ce qu'il est prévu une pièce d'appui (64) qui reçoit en son intérieur l'appui (56) comporte un joint (96) prévu entre l'appui (56) et la face extérieure, entre la pièce d'appui (64) et la barre de flexion (34), et peut être insérée de façon étanche aux liquides dans l'une des branches (78).

5.- Dispositif suivant une ou plusieurs des revendications précédentes, caractérisé en ce que l'élément de guidage (60) peut être relié de façon bien définie par une liaison par concordance de forme avec l'autre branche (82).

6.- Dispositif suivant une ou plusieurs des revendications précédentes, l'élément de guidage (60) pouvant être fixé au véhicule tracteur (10) par au moins une vis (68), caractérisé en ce que la patte (58), le support (62) et l'élément de guidage (60) peuvent être fixés ensemble au moyen de la vis (68) au véhicule tracteur (10).

7.- Dispositif suivant une ou plusieurs des revendications précédentes, caractérisé en ce que le support (62) comporte un appendice (70) qui peut être introduit dans une ouverture (71) de conformation correspondante formée dans le véhicule tracteur (10) et entoure concentriquement et avec jeu la barre de flexion (34).

8.- Dispositif suivant une ou plusieurs des revendications précédentes, caractérisé en ce qu'un joint (74) est inséré entre l'appendice (70) et l'ouverture (71).

9.- Dispositif suivant une ou plusieurs des revendications précédentes, caractérisé en ce que l'appendice (70) et la pièce d'appui (64) sont rassemblées dans un cylindre traversant l'une des branches (78).

FIG. 1

FIG. 2